# FASCICULE DE BREVET EUROPEEN

(11) **EP 3 637 845 B1**
(45) Date de publication et mention de la délivrance du brevet: **02.06.2021**
(21) Numéro de dépôt: 19201462.9
(22) Date de dépôt: 04.10.2019
(51) Int. Cl.: H04L 1/16, H04L 9/30, H04L 9/34

(54) **PROCÉDÉ DE COMMUNICATION BASÉ SUR UN PROTOCOLE DE TRANSMISSION PAR TRAMES**
KOMMUNIKATIONSVERFAHREN MIT HILFE EINES RAHMENBASIERTEN ÜBERTRAGUNGSPROTOKOLLS
COMMUNICATION METHOD USING FRAME BASED TRANSMISSION PROTOCOL

(30) Priorité: 09.10.2018 FR 1859364
(43) Date de publication de la demande: 15.04.2020
(73) Titulaire: SAGEMCOM ENERGY & TELECOM SAS, 92500 Rueil-Malmaison (FR)
(72) Inventeur: TEBOULLE, Henri, 92500 RUEIL MALMAISON (FR); LE GOURRIEREC, Marc, 92500 RUEIL MALMAISON (FR)
(74) Mandataire: Cabinet Le Guen Maillet

(56) Documents cités:
- MINABURO ACKLIO L TOUTAIN IMT-ATLANTIQUE C GOMEZ UNIVERSITAT POLITECNICA DE CATALUNYA D BARTHEL ORANGE LABS A: "LPWAN Static Context Header Compression (SCHC) and fragmentation for IPv6 and UDP; draft-ietf-lpwan-ipv6-static-context-hc-15 .txt", LPWAN STATIC CONTEXT HEADER COMPRESSION (SCHC) AND FRAGMENTATION FOR IPV6 AND UDP; DRAFT-IETF-LPWAN-IPV6-STATIC-CONTEXT-HC-15 .TXT; INTERNET-DRAFT: LPWAN WORKING GROUP, INTERNET ENGINEERING TASK FORCE, IETF; STANDARDWORKINGDRAFT, INTERNET SOCIETY (ISO, no. 15, 29 juin 2018 (2018-06-29), pages 1-69, XP015127200,
- ALO?S AUGUSTIN ET AL: "A Study of LoRa: Long Range & Low Power Networks for the Internet of Things", SENSORS, vol. 16, no. 9, 9 septembre 2016 (2016-09-09), XP055365265, CH ISSN: 1424-8220, DOI: 10.3390/s16091466

## Description

L'invention concerne un procédé de communication, exécuté dans un réseau sans fil à grande portée et permettant une faible consommation d'énergie, ainsi qu'un dispositif, un programme d'ordinateur et des moyens de stockage mettant en œuvre le procédé.

L'Internet se transforme progressivement en un réseau étendu, appelé « Internet des objets », reliant toutes sortes d'objets devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (marque déposée) («Long Range » en terminologie anglo-saxonne). La technologie LoRa opère sur des bandes de fréquences connues sous l'appellation « *Bande ISM* » (Industriel, Scientifique et Médical) comprenant des bandes de fréquences pouvant être utilisées librement pour des applications industrielles, scientifiques et médicales. La technologie LoRa est basée sur une technologie d'étalement de spectre permettant d'obtenir des communications bas débit ayant une bonne robustesse dans une bande ISM particulièrement bruitée.

Un réseau basé sur la technologie LoRa (appelé « réseau LoRa » par la suite) utilise un protocole appelé LoRaWAN. Un réseau LoRa est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et de les remonter vers au moins un serveur (« LoRa Network Server (LNS) » en terminologie anglo-saxonne) qui les traitera.

Dans un fonctionnement classique d'un réseau LoRa, un terminal désirant transmettre un message *(i.e.* des données) au serveur LNS, transmet ce message dans une trame, dite trame montante, conforme au protocole LoRaWAN. La trame montante est transmise en mode multidiffusion (« broadcast » en terminologie anglo-saxonne). Cette trame montante est reçue par au moins une passerelle. Chaque passerelle ayant reçu la trame la décode et retransmet le message au serveur LNS, par exemple, dans une requête HTTP (protocole de transfert hypertext, « HyperText Transfer Protocol » en terminologie anglo-saxonne) ou une requête HTTPS (protocole de transfert hypertext sécurisé, « HyperText Transfer Protocol secure » en terminologie anglo-saxonne). Si plusieurs passerelles ont reçu la trame montante, le serveur LNS reçoit plusieurs requêtes HTTP (ou HTTPS) contenant le message. Le serveur LNS doit alors désigner parmi les passerelles ayant reçu la trame montante, la passerelle à utiliser pour relayer une réponse au message contenu dans la trame montante. La réponse est transmise du serveur LNS à la passerelle désignée dans une requête HTTP (ou HTTPS), puis en point à point, de la passerelle désignée au terminal dans une trame descendante conforme au protocole LoRaWAN. Dans une majorité d'implémentations des réseaux LoRa, la passerelle désignée est celle offrant la qualité de transmission la meilleure avec le terminal ayant émis la trame montante. Nous appelons par la suite une trame conforme au protocole LoRaWAN, trame LoRa.

Les réseaux LoRa ont été développés à la base pour transporter des données issues d'objets connectés. On s'est rapidement rendu compte toutefois que d'autres types de données, qui sont généralement transportées par d'autres types de réseau tels que les réseaux IP (Protocol internet : « Internet Protocol » en terminologie anglo-saxonne) version 4 (RFC-791) ou version 6 (RFC-2460) ou les réseaux CPL (Courant Porteur en Ligne), peuvent être transportés ou relayés par les réseaux LoRa. Ces données sont alors transportées dans des conteneurs (« payload » en terminologie anglo-saxonne), dits *conteneurs LoRa,* de niveau applicatif dans le modèle OSI (Interconnexion des systèmes ouverts : « Open Systems Interconnection » en terminologie anglo-saxonne), ces conteneurs LoRa correspondant à une partie utile (payload) des trames LoRa. Une particularité des conteneurs LoRa est qu'ils peuvent avoir des tailles pouvant varier d'une trame LoRa à une autre trame LoRa. Ces variations des tailles des conteneurs LoRa sont provoquées par des variations d'un débit disponible pour les données applicatives, dit débit utile. Lors d'une transmission de données, le débit utile peut varier sous l'influence du serveur LNS qui modifie par exemple une modulation utilisée pour la transmission ou parce que des données de contrôle, qui sont prioritaires dans le protocole LoRaWAN, doivent être transmises.

Lorsque des trames de niveaux applicatifs, dites trames applicatives, sont de tailles supérieures à la taille d'un conteneur LoRa devant les transporter, ces trames applicatives doivent être segmentées en une pluralité de segments adaptés à la taille dudit conteneur. Beaucoup de mécanismes de segmentation de trames de la littérature s'appuient sur des segmentations en segments de taille fixe. Une segmentation en segments de taille fixe combinée à un transport dans des conteneurs de tailles variables oblige quasiment à aligner la taille des segments sur une taille minimale des conteneurs. User d'une telle segmentation dans un contexte de transport par des conteneurs de tailles variables est inefficace car elle entraîne une proportion de données de signalisation (ou données d'entête) trop importante par rapport aux données utiles. Il existe aussi des segmentations dites alignées à l'octet (« byte aligned » en terminologie anglo-saxonne) utilisant des segments de tailles variables adaptés aux conteneurs de tailles variables. Ce type de segmentation utilise une signalisation permettant de pointer sur des octets dans les conteneurs, ce qui induit là encore une proportion de données de signalisation importante par rapport aux données utiles.

Il est souhaitable de pallier ces inconvénients de l'état de la technique. Il est notamment souhaitable de proposer une méthode permettant d'encapsuler efficacement des trames applicatives dans des conteneurs LoRa, les trames applicatives ayant des tailles supérieures aux tailles des conteneurs LoRa devant les transporter. Par ailleurs, il est souhaitable que la méthode proposée permette une gestion efficace des éventuelles erreurs de transmission provoquant des pertes de trames.

Le document de MINABURO et al., "LPWAN Static Context Header Compression (SCHC) and fragmentation for IPv6 and UDP" (DRAFT IETF) du 26/06/2018, décrit l'utilisation de numéros de fragments compressés ("Fragment Compressed Number", FCN), afin de réduire les données d'entête lors de l'encapsulation d'une trame de données utiles dans une trame protocolaire.

Il est par ailleurs souhaitable de proposer une méthode qui soit simple à mettre en œuvre et à faible coût.

Selon un premier aspect de la présente invention, la présente invention concerne un procédé de communication entre un premier et un second nœuds dans un réseau utilisant un protocole de transmission par trames, chaque trame conforme audit protocole, dite trame protocolaire, comprenant un conteneur destiné à transporter des données utiles, chaque conteneur ayant une taille pouvant varier d'une trame protocolaire à une autre trame protocolaire. Le procédé comprend, lorsqu'il est exécuté par le premier nœud : obtenir une trame de données utiles à transmettre au deuxième noeud ; diviser la trame de données utiles en un ensemble de blocs de taille prédéfinie, chaque bloc étant associé à un numéro égal à un rang dudit bloc dans la trame de données utiles ; appliquer une procédure d'encapsulation et de transmission aux blocs dudit ensemble comprenant : parcourir les blocs par ordre décroissant de leur numéro, et insérer les blocs dans cet ordre dans au moins un segment, les blocs étant insérés dans chaque segment jusqu'à atteindre une taille de segment aussi proche que possible d'une taille courante d'un conteneur tout en restant inférieure ou égale; insérer dans chaque segment une information de vérification comprenant un identifiant représentatif du numéro du bloc ayant le rang le plus élevé dans ledit segment, et comprenant de plus un code d'identification d'erreurs permettant de déterminer si l'ensemble de blocs a été reçu dans le segment contenant le bloc de rang le plus faible ; et, transmettre chaque segment au second nœud dans une trame protocolaire ; et, en cas de réception d'un accusé de réception de la part du second nœud contenant une information représentative d'au moins un bloc non reçu par le second nœud, appliquer la procédure d'encapsulation et de transmission à au moins chaque bloc non reçu, le second nœud ayant utilisé chaque information de vérification reçue pour déterminer chaque bloc perdu.

Dans un mode de réalisation, le réseau est un réseau sans fil à grande portée et permettant une faible consommation d'énergie basé sur la technologie LoRa, le protocole est le protocole LoRaWAN et le premier nœud est un dispositif adapté pour communiquer sur un réseau LoRa en utilisant le protocole LoRaWAN, dit terminal LoRa, et le second nœud est un serveur de réseau LoRa ou le premier nœud est un serveur de réseau LoRa et le second nœud est un terminal LoRa.

Dans un mode de réalisation, si suite à la transmission de chaque segment au deuxième nœud, le premier nœud ne reçoit pas d'accusé de réception de la part du deuxième nœud après une durée prédéfinie suivant la transmission du dernier segment, le premier nœud transmet au second nœud un segment contenant au moins le bloc de rang le plus faible, le code d'identification d'erreur et un identifiant représentatif du numéro du bloc ayant le rang le plus élevé dans ledit segment.

Dans un mode de réalisation, l'information de vérification est comprise dans un entête dudit segment, ledit entête comprenant en outre une information représentative d'un changement d'ensemble de blocs dont une valeur est modifiée à chaque fois qu'un nouvel ensemble de blocs est transmis au second nœud et/ou une information représentative d'une demande d'accusé de réception, permettant d'activer ou pas un mécanisme d'accusé de réception, le premier nœud se mettant en attente d'un accusé de réception pour l'ensemble de blocs de la part du deuxième nœud lorsque ledit mécanisme est activé.

Dans un mode de réalisation, l'information représentative d'au moins un bloc non reçu par le second nœud est une suite de bits, chaque bit de la suite représentant un bloc de l'ensemble de blocs, et pour chaque bit, une première valeur dudit bit indique une réception du bloc correspondant et une seconde valeur dudit bit indique une non réception du bloc correspondant.

Dans un mode de réalisation, l'accusé de réception comprend une information permettant d'identifier à quel ensemble de blocs se rapporte ledit accusé de réception et/ou une information indiquant si, lors d'une vérification d'une intégrité des blocs reçus en utilisant le code de détection d'erreur, le second nœud a détecté ou pas une erreur.

Dans un mode de réalisation, lorsque le premier nœud est un serveur et le deuxième nœud est un terminal LoRa fonctionnant en classe A selon le protocole LoRaWAN, lorsque le deuxième nœud a reçu un premier segment comprenant des blocs d'un ensemble de blocs, à chaque réception d'un segment, le deuxième nœud mesure une durée depuis la réception dudit segment et, lorsque ladite durée est supérieure à une durée maximale prédéfinie sans qu'il ait transmis une trame vers le premier nœud, transmet une trame protocolaire représentative d'une demande de transmission de données au premier nœud afin de permettre au premier nœud de transmettre un nouveau segment.

Selon un deuxième aspect de l'invention, l'invention concerne un dispositif, dit premier nœud, de type nœud de communication adapté pour communiquer avec un second dispositif de type nœud de communication, dit second nœud, dans un réseau utilisant un protocole de transmission par trames, chaque trame conforme audit protocole, dite trame protocolaire, comprenant un conteneur destiné à transporter des données utiles, chaque conteneur ayant une taille pouvant varier d'une trame protocolaire à une autre trame protocolaire. Le dispositif comprend: des moyens d'obtention pour obtenir une trame de données utiles à transmettre au deuxième noeud ; des moyens de segmentation pour diviser la trame de données utiles en un ensemble de blocs de taille prédéfinie, chaque bloc étant associé à un numéro égal à un rang dudit bloc dans la trame de données utiles ; des moyens de traitements pour appliquer une procédure d'encapsulation et de transmission aux blocs dudit ensemble comprenant : des moyens de parcours pour parcourir les blocs par ordre décroissant de leur numéro, et insérer les blocs dans cet ordre dans au moins un segment, les blocs étant insérés dans chaque segment jusqu'à atteindre une taille de segment aussi proche que possible d'une taille courante d'un conteneur tout en restant inférieure ou égale; des moyens d'encapsulation pour insérer dans chaque segment une information de vérification comprenant un identifiant représentatif du numéro du bloc ayant le rang le plus élevé dans ledit segment et comprenant de plus un code d'identification d'erreur permettant de déterminer si l'ensemble de blocs a été reçu dans le segment contenant le bloc de rang le plus faible ; des moyens de transmission pour transmettre chaque segment au second nœud dans une trame protocolaire ; et, des moyens de réception pour recevoir du second nœud un accusé de réception comprenant une information représentative d'au moins un bloc non reçu par le second nœud, des moyens de traitement pour appliquer la procédure d'encapsulation et de transmission à au moins chaque bloc non reçu en cas de réception d'un tel accusé de réception de la part du second nœud, le second nœud ayant utilisé chaque information de vérification reçue pour déterminer chaque bloc perdu.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect, l'invention concerne des moyens de stockage stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau LoRa dans lequel est mise en œuvre l'invention ;
- la Fig. 2A illustre schématiquement un module de traitement compris dans un serveur LNS ;
- la Fig. 2B illustre schématiquement un module de traitement compris dans un terminal LoRa ;
- la Fig. 3 illustre schématiquement un premier exemple de procédé de communication selon l'invention ;
- la Fig. 4 illustre schématiquement un premier format d'entête d'un segment destiné à contenir des blocs de données utiles ;
- la Fig. 5 illustre schématiquement un deuxième format d'entête d'un segment destiné à contenir des blocs de données utiles ;
- la Fig. 6 illustre schématiquement un format d'accusé de réception ;
- la Fig. 7 illustre schématiquement un exemple de formation de segments ; et,
- la Fig. 8 illustre schématiquement un deuxième exemple de procédé de communication selon l'invention.

L'invention est décrite par la suite dans un contexte de réseau LoRa. L'invention s'applique toutefois dans d'autres contextes pour tous types de réseaux utilisant un protocole de transmission par trames (ou paquets) dans lequel chaque trame destinée à transporter des données utiles encapsule ces données utiles dans un conteneur ayant une taille pouvant varier d'une trame à une autre trame.

Par ailleurs, il est connu que le protocole LoRaWAN définit trois classes de terminaux, dits terminaux LoRa, (A, B et C), chaque classe de terminaux étant associée à un mode de fonctionnement particulier. La classe A doit être implémentée dans tous les terminaux par souci de compatibilité. Un terminal peut changer de classe en cours de fonctionnement.

La classe A est la plus économique en termes de consommation d'énergie pour les terminaux. Dans cette classe, lorsqu'un terminal LoRa a des données à envoyer il le fait sans contrôle puis il ouvre deux fenêtres d'écoute successives pour des éventuels messages provenant du serveur LNS. Ces deux fenêtres sont les seuls moments durant lesquels le serveur LNS peut envoyer au terminal les données qu'il a précédemment stockées à son attention.

La classe B offre un compromis entre consommation énergétique pour le terminal LoRa et besoin en communication bidirectionnelle entre ledit terminal et le serveur LNS. Un équipement de classe B ouvre une fenêtre de réception à des intervalles programmés par des messages périodiques envoyés par le serveur LNS.

La classe C est la classe la moins économique en termes de consommation énergétique pour les terminaux LoRa. En contrepartie, cette classe autorise des communications bidirectionnelles à tous moments puisque les terminaux LoRa sont en permanence en écoute du serveur LNS.

Comme nous le verrons par la suite, l'invention est particulièrement bien adaptée au fonctionnement en classes C et B. Mais, nous montrons aussi un mode de fonctionnement particulier adapté à la classe A.

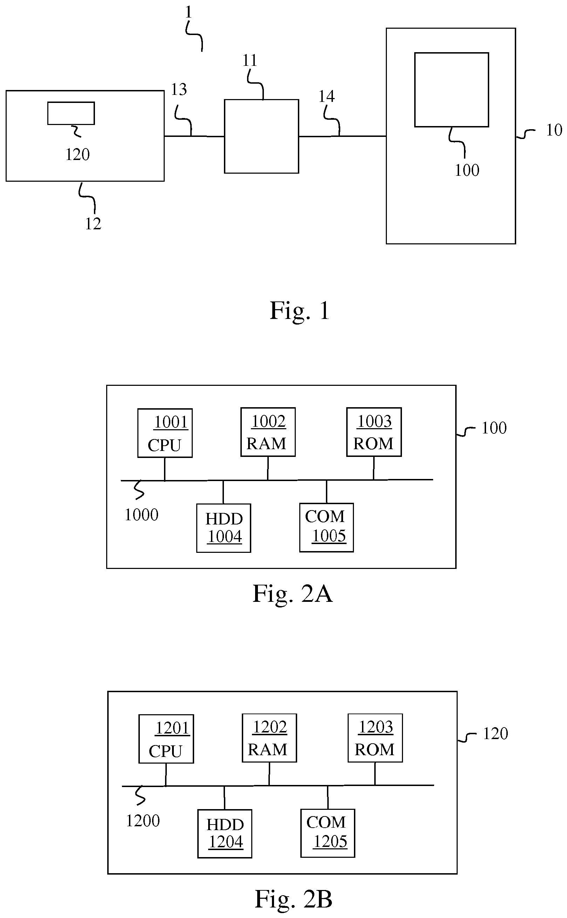

La **Fig.** 1 illustre schématiquement un exemple de réseau LoRa 1 dans lequel est mise en œuvre l'invention.

Dans l'exemple de la Fig. 1, le réseau LoRa 1 comprend un serveur LNS 10, au moins une passerelle 11 et au moins un terminal LoRa 12. Dans la Fig. 1, pour simplifier, nous ne décrivons qu'une passerelle et qu'un terminal LoRa. La passerelle 11 communique avec le serveur LNS 10 par l'intermédiaire d'un lien de communication filaire ou sans fil 14. De plus, chaque communication entre la passerelle 11 et le terminal LoRa 12 utilise un lien de communication sans fils 13.

Le serveur LNS 10 comprend un module de traitement 100. Le terminal LoRa 12 comprend un module de traitement 120.

On note que dans le réseau LoRa 1, les communications entre le terminal 12 et la passerelle 11 utilisent des trames compatibles avec le protocole LoRaWAN. Le document LoRaWAN 1.1 d'octobre 2017 définit les communications entre les terminaux et les passerelles d'un réseau LoRa. Par ailleurs, les communications entre la passerelle 11 et le serveur LNS 10 se font, par exemple, sous forme de requêtes HTTP ou HTTPS. Dans l'invention, la passerelle 11 assure un rôle de relai entre le terminal LoRa 12 et le serveur LNS 10. Dans un sens dit montant (« uplink » en terminologie anglo-saxonne), c'est-à-dire pour des transmissions du terminal LoRa 12 au serveur LNS 10, la passerelle 11 encapsule les trames LoRa qu'elle reçoit dans des trames HTTP ou HTTPS, et transmet les trames LoRa ainsi encapsulées au serveur LNS 10. Dans un sens dit descendant (« downlink » en terminologie anglo-saxonne), c'est-à-dire pour des transmissions du serveur LNS 10 au terminal LoRa 12, la passerelle 11 extrait les trames LoRa qu'elle reçoit dans des trames HTTP ou HTTPS, et transmet les trames LoRa obtenues au terminal 12.

Nous décrivons ici un serveur LNS 10. Dans un mode de réalisation, ce serveur LNS 10 pourrait tout aussi bien représenter un ensemble de serveurs comprenant un premier serveur destiné à communiquer avec des passerelles telles que la passerelle 11 et au moins un serveur applicatif relié par un réseau de communication au premier serveur. Dans ce mode de réalisation, le premier serveur servirait de relai entre les passerelles et le ou les serveurs applicatifs, les trames LoRa générées par le terminal LoRa 12 étant destinées au serveur applicatif ou à un des serveurs applicatifs.

La **Fig. 2A** illustre schématiquement un exemple d'architecture matérielle du module de traitement 100 compris dans le serveur LNS 10.

Selon l'exemple d'architecture matérielle représenté à la Fig. 2A, le module de traitement 100 comprend alors, reliés par un bus de communication 1000 : un processeur ou CPU (« Central Processing Unit » en terminologie anglo-saxonne) 1001 ; une mémoire vive RAM (« Random Access Memory » en terminologie anglo-saxonne) 1002 ; une mémoire morte ROM (« Read Only Memory » en terminologie anglo-saxonne) 1003 ; une unité de stockage telle qu'un disque dur ou un lecteur de support de stockage, tel qu'un lecteur de cartes SD (« Secure Digital » en terminologie anglo-saxonne) 1004 ; au moins une interface de communication 1005 permettant au module de traitement 100 de communiquer avec d'autres modules ou dispositifs. Par exemple l'interface de communication 1005 permet au module de traitement 100 de communiquer avec la passerelle 11 du réseau LoRa 1 ou avec des serveurs distants appartenant au nuage (« cloud » en terminologie anglo-saxonne) tels que les serveurs applicatifs évoqués plus haut.

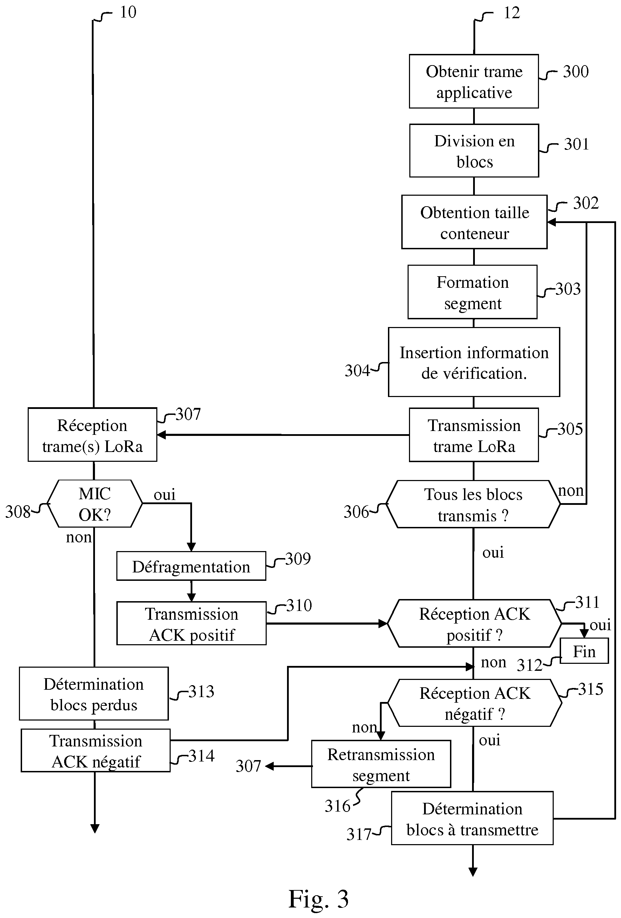

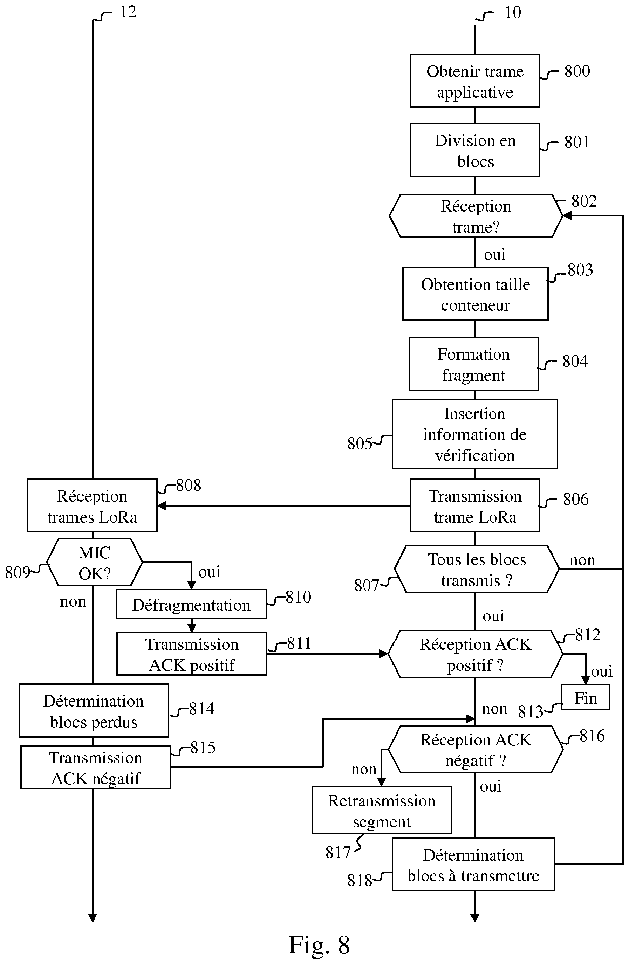

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le serveur LNS 10 est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, des procédés décrits ci-après en relation avec les Figs. 3 et 8.

La **Fig. 2B** illustre schématiquement un exemple d'architecture matérielle du module de traitement 120 compris dans le terminal LoRa 12.

Selon l'exemple d'architecture matérielle représenté à la Fig. 2B, le module de traitement 120 comprend alors, reliés par un bus de communication 1200 : un processeur ou CPU 1201 ; une mémoire vive RAM 1202 ; une mémoire morte ROM 1203 ; une unité de stockage telle qu'un disque dur ou un lecteur de support de stockage, tel qu'un lecteur de cartes SD 1204 ; au moins une interface de communication 1205 permettant au module de traitement 120 de communiquer avec d'autres modules ou dispositifs. Par exemple, l'interface de communication 1205 permet au module de traitement 120 de communiquer avec la passerelle 11.

Le processeur 1201 est capable d'exécuter des instructions chargées dans la RAM 1202 à partir de la ROM 1203, d'une mémoire externe (non représentée), d'un support de stockage (tel qu'une carte SD), ou d'un réseau de communication. Lorsque la terminal 12 est mise sous tension, le processeur 1201 est capable de lire de la RAM 1202 des instructions et de les exécuter. Dans un mode de réalisation, ces instructions forment un programme d'ordinateur causant la mise en œuvre complète ou partielle, par le processeur 1201, des procédés décrits ci-après en relation avec les Figs. 3 et 8.

Les procédés décrits en relation avec les Figs. 3 et 8 peuvent être implémentés sous forme logicielle par exécution d'un ensemble d'instructions par une machine programmable, par exemple un DSP (« Digital Signal Processor » en terminologie anglo-saxonne) ou un microcontrôleur, ou être implémentés sous forme matérielle par une machine ou un composant dédié, par exemple un FPGA (« Field-Programmable Gate Array » en terminologie anglo-saxonne) ou un ASIC (« Application-Specific Integrated Circuit » en terminologie anglo-saxonne).

La **Fig. 3** illustre schématiquement un premier exemple de procédé de communication selon l'invention.

Dans une étape 300, le module de traitement 120 reçoit une trame de données utiles à transmettre au serveur LNS 10. Par la suite nous appelons les trames de données utiles, trames applicatives.

Dans une étape 301, le module de traitement 120 divise la trame applicative en un ensemble de blocs de taille prédéfinie L. Dans une mode de réalisation, la taille prédéfinie *L* est égale à une taille minimale *Bₘᵢₙ* d'un conteneur LoRa. La taille minimale *Bₘᵢₙ* est dépendante de l'implémentation du protocole LoRaWAN utilisée et est supposée connue du module de traitement 120. Dans un mode de réalisation *Bₘᵢₙ* = 32 octets. Chaque bloc de l'ensemble de blocs est associé à un numéro égal à un rang dudit bloc dans la trame applicative.

Dans des étapes 302 à 306, le module de traitement applique une procédure d'encapsulation et de transmission aux blocs dudit ensemble de blocs.

Lors de l'étape 302, le module de traitement 120 obtient une taille courante *l_{curr}* d'un conteneur LoRa. Comme nous l'avons vu plus haut, la taille d'un conteneur LoRa peut varier d'une trame LoRa à une autre trame LoRa. Cette taille dépend du débit utile disponible pour les communications entre le terminal 12 et la passerelle 11 et de la nécessité ou pas de transmettre des données de contrôle des communications selon le protocole LoRaWAN *(i.e.* aussi appelées *commandes MAC* (contrôle d'accès au médium, « Medium Access Control » en terminologie anglo-saxonne)). Le module de traitement 120 connaît à tous moments la taille courante *l_{curr}* d'un conteneur LoRa car il sait à tout moment quel est le débit utile et si des données de contrôle doivent être transmises.

Lors de l'étape 303, le module de traitement 120 parcourt les blocs par numéros décroissants (c'est-à-dire par rang décroissant dans la trame applicative) et insère chaque bloc dans un segment. Un segment comprend un entête et au moins un bloc.

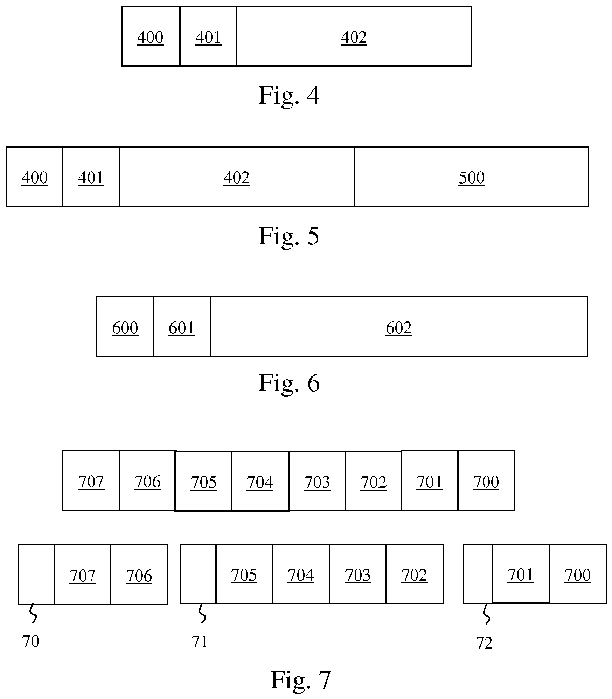

La **Fig. 4** illustre schématiquement un premier format d'entête d'un segment destiné à contenir des blocs de données utiles.

L'entête d'un segment décrit en relation avec la Fig. 4 est par exemple codé sur « 8 » bits.

Un premier champ 400, codé sur « 1 » bit, appelé champ *FS* (Session de fragmentation, « Fragmentation Session » en terminologie anglo-saxonne) comprend une information représentative d'un changement d'ensemble dont une valeur est modifiée à chaque fois qu'un nouvel ensemble de blocs est transmis. Par exemple, lorsqu'un premier ensemble de blocs est transmis par le module de traitement 120, le champ FS est à « 1 ». Si le premier ensemble de blocs est transmis avec succès, le champ *FS* passe à « 0 » pour un deuxième ensemble de blocs transmis par le module de traitement 120. Si le deuxième ensemble de blocs est transmis avec succès, le champ *FS* repasse à « 1 » pour un troisième ensemble de blocs transmis par le module de traitement 120.

Un deuxième champ 401, codé sur « 1 » bit, appelé champ *AR* (demande d'accusé de réception, « Acknowledge Request » en terminologie anglo-saxonne) comprend une information représentative d'une demande d'accusé de réception. Le champ *AR* 401 permet au module de traitement 120 d'activer ou pas un mécanisme d'accusé de réception. Lorsque le mécanisme d'accusé de réception est activé, le module de traitement 120 se met en attente d'un accusé de réception de la part du serveur LNS 10 suite à la transmission d'un ensemble de blocs. Par exemple, le mécanisme d'accusé de réception est activé lorsque le champ *AR* 401 est à « 1 ». Dans un mode de réalisation, seul le segment comprenant le bloc « 0 » comprend un champ *AR* 401 à « 1 » pour activer le mécanisme d'accusé de réception pour tout l'ensemble de blocs.

Un troisième champ 402, codé sur « 6 » bits, comprend une information de vérification. L'information de vérification comprend un identifiant représentatif du numéro du bloc ayant le rang le plus élevé dans ledit segment. Comme nous le verrons par la suite, l'information de vérification permet au serveur LNS 10 de vérifier s'il a reçu tous les blocs de l'ensemble de blocs transmis et si non, de déterminer quels blocs ont été perdus.

Dans un mode de réalisation, l'entête de segment pourrait être plus long et notamment le champ 402 afin de prendre en compte des ensembles de blocs comprenant plus de « 64 » blocs.

On note qu'un segment est de taille *(i.e.* longueur) égale à une somme des tailles cumulées de chaque bloc compris dans ledit segment et d'une taille de l'entête dudit segment.

La **Fig. 5** illustre schématiquement un deuxième format d'entête d'un segment destiné à contenir des blocs de données utiles.

L'entête décrit en relation avec la Fig. 5 comprend des champs 400 et 401 identiques respectivement aux champs 400 et 401 de la Fig. 4. Toutefois, dans cet entête, l'information de vérification est répartie sur deux champs : le champ 402 qui est identique au champ 402 de la Fig. 4 et un champ 500. Le champ 500 comprend un code de détection d'erreur, aussi appelé MIC (vérification d'intégrité de message, « Message Integrity Check » en terminologie anglo-saxonne). Le code de détection d'erreur est calculé sur tous les blocs d'un ensemble de blocs et permet de déterminer si un ou plusieurs blocs ont été perdus au cours de la transmission dudit ensemble.

L'entête de la Fig. 5 est utilisé exclusivement dans un segment contenant le bloc ayant le plus petit numéro (i.e. ayant le rang le plus faible), c'est-à-dire le numéro « 0 ». L'entête de la Fig. 4 est utilisé dans tous les autres segments.

De retour à la Fig. 3, le module de traitement 120 parcourt les blocs par numéros décroissants, et insère les blocs dans cet ordre dans un segment jusqu'à atteindre une taille de segment aussi proche que possible de la taille courante *l_{curr}*. Le module de traitement 120 maximise donc le nombre de blocs insérés dans chaque segment tout en obtenant un (ou des) segments de taille inférieure ou égale à la taille courante *l_{curr}*.

Lors de l'étape 304, le module de traitement 120 insère l'information de vérification dans le segment ainsi formé.

Dans une étape 305, le module de traitement 120 insère le segment ainsi formé dans un conteneur d'une trame LoRa et transmet ladite trame LoRa en direction du serveur LNS 10.

Dans une étape 306, le module de traitement 120 vérifie si tous les blocs de l'ensemble de blocs ont été transmis. Si tous les blocs ont été transmis et que le mécanisme d'accusé de réception n'est pas activé, le module de traitement 120 met fin à la transmission de l'ensemble de blocs et se met par exemple en attente d'une nouvelle trame applicative.

Si tous les blocs ont été transmis et que le mécanisme d'accusé de réception est activé, le module de traitement 120 se met en attente d'un accusé de réception pour l'ensemble de blocs transmis.

Si des blocs restent à transmettre, le module de traitement 120 retourne à l'étape 302.

La **Fig. 7** illustre schématiquement un exemple de formation de segments. Dans l'exemple de la Fig. 7, le module de traitement 120 a obtenu une trame applicative et l'a divisée en un ensemble de « 8 » blocs 700 à 707. Le bloc 700 (respectivement 701, 702, 703, 704, 705, 706, 707) correspond au bloc numéro « 0 » respectivement (« 1 », « 2 », « 3 », « 4 », « 5 », « 6 », « 7 ») dudit ensemble de blocs. Le bloc de numéro « 0 » est donc le bloc de rang le plus faible. Lors de l'application de la procédure d'encapsulation et de transmission, le module de traitement 120 a parcouru les blocs du bloc numéro « 7 » au bloc numéro « 0 ». Un premier segment 70 a été formé avec les blocs « 7 » et « 6 ». Dans ce segment 70, l'information de vérification représente le numéro « 7 » dans le champ 402, le champ *FS* 400 est par exemple à « 0 » et le champ *AR* 401 est à « 0 ». Un deuxième segment 71 a été formé avec les blocs « 5 », « 4 », « 3 » et « 2 ». Dans ce segment 71, l'information de vérification représente le numéro « 5 » dans le champ 402, le champ *FS* 400 est à « 0 » et le champ *AR* 401 est à « 0 ».

On remarque que, puisque la taille du conteneur LoRa a augmenté entre la formation du segment 70 et la formation du segment 71, le module de traitement 120 a pu insérer plus de blocs dans le segment 71 que dans le segment 70. Un troisième segment 72 a été formé avec les blocs « 1 » et « 0 ». Dans ce segment 72, l'information de vérification représente le numéro « 1 » dans le champ 402 et comprend un champ 500 contenant un code de détection d'erreur calculé sur les blocs « 0 » à « 7 ». Le champ *FS* 400 est à « 0 » et le champ *AR* 401 est à « 1 » puisque le mécanisme d'accusé de réception est activé. On remarque que, puisque la taille du conteneur LoRa a diminué entre la formation du segment 71 et la formation du segment 72, le module de traitement 120 a inséré moins de blocs dans le segment 72 que dans le segment 71.

De retour à la Fig. 3, lors d'une étape 307, le module de traitement 100 du serveur LNS 10 reçoit un certain nombre de trames LoRa et se met en attente d'une réception d'une trame LoRa comprenant un segment contenant un champ 500 (et donc un code de détection d'erreurs) et un bloc de numéro « 0 ».

Dès qu'il reçoit un segment contenant un champ 500, le module de traitement 100 exécute une étape 308.

Au cours de l'étape 308, le module de traitement 100 vérifie s'il a reçu tous les blocs de l'ensemble de blocs transmis en utilisant le code de détection d'erreurs. Si aucune erreur n'est détectée, le module de traitement 100 reforme, lors d'une étape 309, la trame applicative. Le module de traitement 100 fournit par exemple cette trame applicative à un module applicatif qu'il exécute.

Si le mécanisme d'accusé de réception est activé, le module de traitement 100 exécute une étape 310 au cours de laquelle le module de traitement 100 transmet un accusé de réception positif à destination du terminal 12.

Dans une étape 311, le module de traitement 120 reçoit l'accusé de réception positif et met fin à la transmission de l'ensemble de blocs courant lors d'une étape 312. Le module de traitement 120 se met alors, par exemple, en attente d'une nouvelle trame applicative.

Si lors de l'étape 308, le module de traitement 100 détecte qu'il n'a pas reçu tous les blocs à partir du code de détection d'erreurs, il détermine à partir du champ *AR* du segment comprenant le bloc « 0 », si le mécanisme d'accusé de réception est activé. Si ce mécanisme n'est pas activé, le module de traitement 100, par exemple, rejette les blocs reçus considérant que si l'ensemble de blocs n'est pas complet, il ne peut reformer une trame applicative utilisable. Dans un mode de réalisation, le module de traitement 100 peut transmettre un ensemble de bloc incomplet à un module applicatif qu'il exécute.

Si lors de l'étape 308, le module de traitement 100 détecte qu'il n'a pas reçu tous les blocs et que le mécanisme d'accusé de réception est activé, il exécute une étape 313.

Au cours de l'étape 313, le module de traitement 100 détermine quel(s) bloc(s) ont été perdu(s). Pour ce faire, il utilise le numéro de bloc contenu dans le champ 402 de chaque segment. Par exemple, si le segment 71 est perdu, le module de traitement 100 sait que le segment 70 contenait le bloc « 7 » en lisant le champ 402 et que le segment 70 contenait deux blocs consécutifs. Il en déduit donc que le segment 70 contenait aussi le bloc « 6 ». De plus, le module de traitement 100 sait que le segment 72 contenait le bloc « 1 » en lisant le champ 402 et que le segment 72 contient deux blocs consécutifs. Il en déduit donc que le segment 72 contenait aussi le bloc « 0 ». Le module de traitement 100 déduit aussi que le bloc « 0 » se trouve dans le segment « 72 » de la présence du champ 500 dans le segment « 72 ». Le module de traitement 100 déduit donc que les blocs « 5 », « 4 », « 3 » et « 2 » sont manquants.

Dans une étape 314, le module de traitement 100 transmet un accusé de réception négatif contenant une information représentative de chaque bloc non reçu.

La **Fig. 6** illustre schématiquement un format d'accusé de réception.

L'accusé de réception décrit en relation avec la Fig. 6 comprend un champ 600, dit champ *FSB* (« fragment Session Backward », en terminologie anglo-saxonne) codé sur un bit qui est une recopie du champ *FS* 400 de l'ensemble de blocs en cours de transmission. En utilisant ce champ, le module de traitement 120 sait à quel ensemble de blocs se rapporte l'accusé de réception. L'accusé de réception comprend de plus un champ 601, dit champ *C* (« checked » en terminologie anglo-saxonne) codé sur un bit indiquant si la vérification du code détecteur d'erreurs du champ 500 par le module de traitement 100 a été positive ou négative. Si le champ *C* est à « 1 », alors la vérification du code détecteur d'erreurs a été positive (*i.e.* aucun bloc n'a été perdu). Si le champ *C* est à « 0 », alors la vérification du code détecteur d'erreur a été négative. Le champ *C* 601 est suivi d'un champ bitmap (suite binaire) 602 comprenant un nombre variable de bits, les champs 600, 601 et 602 ayant une longueur cumulée multiple d'un octet. Le champ 602 comprend un nombre de bits de poids faible au plus égal au nombre de blocs dans l'ensemble de blocs en cours de transmission. Chaque bit de poids faible représente un bloc, le rang de chaque bit de poids faible correspondant à un numéro de bloc de l'ensemble de blocs. Par exemple, le bloc de numéro « 0 » est associé au premier bit de poids faible *(i.e.* le bit le plus à droite). Les bits de poids fort, qui ne sont pas associés à un bloc, sont utilisés uniquement pour que la longueur cumulée des champs 600, 601 et 602 soit alignée sur un multiple d'octet. Les bits de poids fort sont tous à « 0 ». Lorsqu'un bloc a été reçu par le module de traitement 100, le module de traitement 100 met le bit correspondant à ce bloc à « 1 ». Lorsqu'un bloc n'a pas été reçu par le module de traitement 100, le module de traitement 100 met le bit correspondant à ce bloc à « 0 ».

Un accusé de réception positif comprend donc un champ *C* 601 à « 1 », et un champ *bitmap* 602 comprenant des bits non significatifs par exemple, « 6 » bits à « 1 ».

Un accusé de réception négatif comprend donc un champ *C* 601 à « 0 », et un champ *bitmap* 602 dans lequel tous les bits correspondant à un bloc reçu sont à « 1 » et tous les bits correspondant à un bloc perdu sont à « 0 ».

De retour à la Fig. 3, lors d'une étape 315, le module de traitement 120 reçoit un accusé de réception négatif. Par exemple, si le segment 71 a été perdu, le module de traitement 120 reçoit un accusé de réception comprenant un champ *FSB* 600 par exemple à « 0 », un champ *C* 601 à « 1 » et un champ *bitmap* 602 dont les bits de poids faibles sont égaux à « 11000011 », le bit le plus à droite correspondant au bloc de numéro « 0 » et le bit le plus à gauche correspondant au bloc numéro « 7 ».

Suite à la réception de l'accusé de réception négatif, le module de traitement détermine quels blocs ont été perdus en utilisant le champ *bitmap* 602 lors d'une étape 317, puis retourne à l'étape 302 afin de retransmettre au moins les blocs perdus. Lors de cette nouvelle exécution de la procédure d'encapsulation et de transmission, le module de traitement 120 prend en compte la taille courante des conteneurs de trame LoRa. Ainsi, alors que les blocs « 5 » à « 2 » avaient tous été insérés dans un même segment lors de la première transmission de ces blocs, lors de cette retransmission, ils pourraient être transmis dans des segments différents si la taille courante des conteneurs a diminué.

Dans un mode de réalisation, lors de chaque retransmission de blocs, le module de traitement 120 retransmet exclusivement les blocs perdus.

Dans un mode de réalisation, lors de chaque retransmission de blocs, le module de traitement 120 retransmet des blocs consécutifs. Ainsi, si des blocs non consécutifs ont été perdus, le module de traitement 120 retransmet les blocs perdus et aussi les blocs compris entre les deux blocs perdus, même si ces blocs avaient été reçus.

Lors de l'étape 307, le module de traitement 100 combine les blocs reçus suite à une retransmission aux blocs reçus lors de la transmission initiale en ne gardant qu'une version de chaque bloc s'il reçoit des blocs plusieurs fois.

Lors de l'étape 313, le module de traitement 100 détermine les blocs qu'il a reçus (et donc ceux qui ont été perdus) en fonction du numéro de blocs contenu dans le champ 402 de chaque segment, et des numéros de blocs qu'il a reçus précédemment.

Lors de l'étape 315, si après une durée prédéfinie *D* le module de traitement 120 n'a reçu ni accusé de réception négatif, ni accusé de réception positif, il en déduit que le segment contenant le bloc « 0 » et le champ « 500 » a été perdu. Dans ce cas, il forme un segment comprenant au moins le bloc « 0 » et le champ « 500 » et transmet ce segment dans une trame LoRa au serveur LNS 10 lors d'une étape 316. Lors de la réception de ce segment, le module de traitement 100 retourne à l'étape 307. La durée *D* est par exemple égale à cinq minutes.

Dans un mode de réalisation, le module de traitement 120 transmet au maximum *N* fois un même bloc. Si au bout d'un nombre *N* de transmissions, le module de traitement 120 reçoit toujours un accusé de réception négatif pour un même ensemble de blocs, il abandonne la transmission dudit ensemble de blocs. Le nombre *N* est par exemple égal à « 8 ». Dans un autre mode de réalisation, si au bout d'un nombre *N* de transmissions, le module de traitement 120 reçoit toujours un accusé de réception négatif pour un même ensemble de blocs, le module de traitement 120 retransmet tous les blocs de l'ensemble de blocs. Dans ce cas, le module de traitement 120 change la valeur du champ *FS* 400 pour se comporter comme s'il transmettait un nouvel ensemble de blocs.

Si suite à une réception de segments contenant des blocs d'un premier ensemble de blocs, le module de traitement 100 ne reçoit pas de segment contenant le bloc « 0 » et le champ 500 relatif à cet ensemble de blocs mais des blocs d'une autre session, le module de traitement 100 rejette les blocs pour lesquels il n'a pas reçu de trame contenant le bloc « 0 » et le champ 500. Il considère alors que l'ensemble correspondant est définitivement perdu.

Dans la description du procédé de la Fig. 3 ci-dessus, le terminal LoRa 12 joue un rôle d'émetteur et le serveur LNS 10 joue un rôle de récepteur. Dans un mode de fonctionnement de classe B ou C du protocole LoRaWAN, les rôles peuvent être inversés. Le serveur LNS 10 peut ainsi devenir un émetteur et le terminal LoRa 12 peut devenir un récepteur. Malgré ce changement de rôle, le procédé de la Fig. 3 reste identique.

Dans le cas du mode de fonctionnement de classe A, le procédé de la Fig. 3 peut être appliqué lorsque le terminal LoRa 12 joue le rôle de l'émetteur et le serveur LNS 10 joue le rôle du récepteur. Mais, un autre procédé décrit en relation avec la Fig. 8 est appliqué lorsque les rôles sont inversés car en classe A toutes les communications sont à l'initiative du terminal LoRa. En classe A, le serveur LNS 10 ne peut transmettre un message au terminal LoRa 12 quand il le souhaite.

La **Fig. 8** illustre schématiquement un deuxième exemple de procédé de communication selon l'invention.

Dans une étape 800, le module de traitement 100 reçoit une trame applicative à transmettre au terminal LoRa 12.

Dans une étape 801, le module de traitement 100 divise la trame applicative en un ensemble de blocs de taille prédéfinie *L.* Chaque bloc de l'ensemble de blocs est associé à un numéro égal à un rang dudit bloc dans la trame applicative.

Dans une étape 802, le module de traitement 100 se met en attente d'une réception d'une trame LoRa de la part du terminal LoRa 12. En effet, en classe A, chaque communication du serveur LNS 10 vers le terminal LoRa 12 doit se faire à l'initiative du terminal LoRa 12. Dès qu'une trame LoRa est reçue de la part du terminal LoRa 12, le module de traitement 100 exécute une étape 803.

Lors de l'étape 803, le module de traitement 100 obtient la taille courante *l_{curr}* d'un conteneur LoRa.

Dans une étape 804, le module de traitement 100 parcourt les blocs par numéros décroissants, et insère les blocs dans cet ordre dans un segment jusqu'à atteindre une taille de segment aussi proche que possible de la taille courante *l_{curr}*. Le module de traitement 100 maximise donc le nombre de blocs insérés dans chaque segment tout en obtenant un (ou des) segments de taille inférieure ou égale à la taille courante *l_{curr}*. Comme dans le procédé décrit en relation avec la Fig. 3, le segment comprenant le bloc « 0 » comprend l'entête décrit en relation avec la Fig. 5, alors que tous les autres segments comprennent l'entête décrit en relation avec la Fig. 4.

Lors d'une étape 805, le module de traitement 100 insère l'information de vérification dans le segment ainsi formé.

Dans une étape 806, le module de traitement 100 insère le segment ainsi formé dans un conteneur LoRa et transmet la trame LoRa correspondante en direction du terminal LoRa 12. La transmission se fait dans les fenêtres de réception du terminal LoRa 12 définies à partir d'un instant de réception de la trame LoRa reçue lors de l'étape 802.

Dans une étape 807, le module de traitement 100 vérifie si tous les blocs de l'ensemble de blocs ont été transmis.

Si certains blocs n'ont pas été transmis, le module de traitement 100 retourne à l'étape 802 et se met en attente d'une réception d'une trame LoRa en provenance du terminal LoRa 12 pour poursuivre.

Si tous les blocs ont été transmis et que le mécanisme d'accusé de réception n'est pas activé, le module de traitement 100 met fin à la transmission de l'ensemble de blocs et se met par exemple en attente d'une nouvelle trame applicative.

Si tous les blocs ont été transmis et que le mécanisme d'accusé de réception est activé, le module de traitement 100 se met en attente d'un accusé de réception de la part du terminal LoRa 12.

Lors d'une étape 808, le module de traitement 120 du terminal LoRa 12 reçoit un certain nombre de trames LoRa et se met en attente d'une réception d'une trame LoRa comprenant un segment contenant un champ 500 (et donc un code de détection d'erreurs) et un bloc de numéro « 0 ».

Dès qu'il reçoit un segment contenant un champ 500, le module de traitement 120 exécute une étape 809.

Au cours de l'étape 809, le module de traitement 120 vérifie s'il a reçu tous les blocs de l'ensemble de blocs transmis en utilisant le code de détection d'erreurs. Si aucune erreur n'est détectée, le module de traitement 120 reforme, lors d'une étape 810, la trame applicative. Le module de traitement 120 fournit, par exemple, cette trame applicative à un module applicatif qu'il exécute.

Si le mécanisme d'accusé de réception est activé, le module de traitement 120 exécute une étape 811 au cours de laquelle le module de traitement 120 transmet un accusé de réception positif à destination du serveur LNS 10.

Dans une étape 812, le module de traitement 100 reçoit l'accusé de réception positif et met fin à la transmission de l'ensemble de blocs courant lors d'une étape 813. Le module de traitement 100 se met alors, par exemple, en attente d'une nouvelle trame applicative.

Si lors de l'étape 809, le module de traitement 120 détecte qu'il n'a pas reçu tous les blocs, il détermine à partir du champ *AR,* si le mécanisme d'accusé de réception est activé. Si ce mécanisme n'est pas activé, le module de traitement 120 par exemple, rejette les blocs reçus considérant que si l'ensemble de blocs n'est pas complet, il ne peut reformer une trame applicative utilisable.

Si lors de l'étape 809, le module de traitement 120 détecte qu'il n'a pas reçu tous les blocs et que le mécanisme d'accusé de réception est activé, il exécute une étape 814.

Au cours de l'étape 814, le module de traitement 120 détermine quel(s) bloc(s) ont été perdu(s).

Dans une étape 815, le module de traitement 120 transmet un accusé de réception négatif contenant une information représentative de chaque bloc non reçu.

Lors d'une étape 816, le module de traitement 120 reçoit un accusé de réception négatif.

Suite à la réception de l'accusé de réception négatif, le module de traitement détermine quels blocs ont été perdus en utilisant le champ *bitmap* 602 lors d'une étape 818 puis retourne à l'étape 802 afin de retransmettre au moins les blocs perdus. Là encore, le module de traitement 100 se met en attente d'une réception d'une trame LoRa en provenance du terminal LoRa 12 pour poursuivre la procédure d'encapsulation et de transmission.

Lors de l'étape 808, le module de traitement 120 combine les blocs reçus suite à une retransmission aux blocs reçus lors de la transmission initiale en ne gardant qu'une version de chaque bloc s'il reçoit des blocs plusieurs fois.

Lors de l'étape 814, le module de traitement 120 détermine les blocs qu'il a reçus (et donc ceux qui ont été perdus) en fonction du numéro de blocs contenu dans le champ 402 de chaque segment, et des numéros de blocs qu'il a reçus précédemment.

Lors de l'étape 816, si après une durée prédéfinie *D* le module de traitement 100 n'a reçu ni accusé de réception négatif, ni accusé de réception positif, il en déduit que le segment contenant le bloc « 0 » et le champ « 500 » a été perdu. Dans ce cas, il forme un segment comprenant au moins le bloc « 0 » et le champ « 500 » et transmet ce segment dans une trame LoRa au terminal 12 lors d'une étape 817. Là encore le module de traitement 100 attend de recevoir une trame LoRa en provenance du terminal LoRa 12 pour exécuter l'étape 817. Lors de la réception de ce segment, le module de traitement 120 retourne à l'étape 808. La durée *D* est par exemple égale à cinq minutes.

Dans un mode de réalisation, le module de traitement 120 transmet au maximum *N* fois un même bloc. Si au bout d'un nombre *N* de transmissions d'un même bloc, le module de traitement 100 reçoit toujours un accusé de réception négatif pour un même ensemble de blocs, il abandonne la transmission dudit ensemble de blocs. Le nombre *N* est par exemple égal à « 8 ». Dans un autre mode de réalisation, si au bout d'un nombre *N* de transmissions, le module de traitement 100 reçoit toujours un accusé de réception négatif pour un même ensemble de blocs, le module de traitement 100 retransmet tous les blocs de l'ensemble de blocs. Dans ce cas, le module de traitement 100 change la valeur du champ *FS* 400 pour se comporter comme s'il transmettait un nouvel ensemble de blocs.

Si suite à une réception de segments contenants des blocs d'un premier ensemble de blocs, le module de traitement 100 ne reçoit pas de segment contenant le bloc « 0 » et le champ 500 relatif à cet ensemble de blocs mais des blocs d'un autre ensemble de blocs, le module de traitement 100 rejette les blocs pour lesquels il n'a pas reçu de segment contenant le bloc « 0 » et le champ 500. Il considère alors que l'ensemble de blocs correspondant est définitivement perdu.

Comme nous l'avons vu plus haut, des étapes du procédé de la Fig. 8 exécutées par le module de traitement 100 dépendent d'une réception par le serveur LNS 10 d'une trame LoRa en provenance du terminal LoRa 12. Les transmissions de trames LoRa par le terminal LoRa 12 au serveur LNS 10 peuvent être très espacées dans le temps. Pour éviter qu'une transmission d'un ensemble de blocs par le serveur LNS 10 prenne trop de temps, dès que le module de traitement 120 sait qu'une transmission d'un ensemble de blocs est en cours, le module de traitement 120 mesure à chaque réception d'un segment, une durée δ depuis la réception dudit segment. Lorsque la durée δ dépasse une durée maximale prédéfinie Δ, le module de traitement 120 transmet une trame, dite trame *TR* (requête de transmission, « transmission request » en terminologie anglo-saxonne), représentative d'une demande de transmission de données au serveur LNS 10 afin de permettre au serveur LNS 10 de transmettre un nouveau segment. Le module de traitement 12 sait qu'une transmission d'un ensemble de blocs est en cours, lorsqu'il reçoit un segment dont la valeur du champ *FS* 400 a été modifiée par rapport au segment qu'il a précédemment reçu. Dans un mode de réalisation, la durée maximale prédéfinie Δ est égale à cinq minutes.

Dans un mode de réalisation, le module de traitement 120 réitère l'envoi d'une trame *TR* un nombre *K* de fois tant qu'il ne reçoit pas de nouveau segment pour l'ensemble de blocs en cours de transmission. Par exemple, le nombre *K*=8*.* Dans un mode de réalisation, le module de traitement 120 jette les blocs correspondant à l'ensemble de blocs en cours de transmission si après *K* transmission d'une trame *TR,* le module de traitement 120 n'a pas reçu de nouveau segment.

Dans un mode de réalisation applicable dans le cas du procédé décrit dans la Fig. 3 ou dans le cadre du procédé décrit dans la Fig. 8, le module de traitement du nœud émetteur peut mettre fin à une transmission d'un ensemble de blocs. Le nœudémetteur peut être le terminal LoRa 12 ou le serveur LNS 10. Pour ce faire, le module de traitement du nœudémetteur transmet une trame telle que décrite en Fig. 4 dans lequel le champ *FS* 400 est à la valeur de l'ensemble de blocs en cours de transmission, le champ *AR* 401 est à « 0 » et le champ 402 est à « 000000 ». Lorsqu'il reçoit cette trame, le module de traitement du nœudrécepteur sait que l'émetteur a mis fin à la transmission de l'ensemble de blocs correspondant à la valeur du champ *FS* 400. Le module de traitement du nœudémetteur peut alors passer à un ensemble de blocs suivant. Dans un mode de réalisation, le module de traitement du nœud récepteur jette les blocs correspondant à l'ensemble de blocs dont la transmission a été interrompue. Dans un mode de réalisation, le module de traitement du nœud récepteur transmet les blocs correspondant à l'ensemble de blocs dont la transmission a été interrompue à un module applicatif qu'il exécute.

## Revendications

1. Procédé de communication entre un premier et un second nœud dans un réseau utilisant un protocole de transmission par trames, chaque trame conforme audit protocole, dite trame protocolaire, comprenant un conteneur destiné à transporter des données utiles, chaque conteneur ayant une taille pouvant varier d'une trame protocolaire à une autre trame protocolaire, **caractérisé en ce que** le procédé comprend des étapes exécutées par le premier nœud comprenant :
obtenir (300) une trame de données utiles à transmettre au deuxième noeud ;
diviser (301) la trame de données utiles en un ensemble de blocs de taille prédéfinie, chaque bloc étant associé à un numéro égal à un rang dudit bloc dans la trame de données utiles ;
appliquer une procédure d'encapsulation et de transmission aux blocs dudit ensemble comprenant :
• parcourir les blocs par ordre décroissant de leur numéro, et insérer les blocs dans cet ordre dans au moins un segment, les blocs étant insérés dans chaque segment jusqu'à atteindre une taille de segment aussi proche que possible d'une taille courante d'un conteneur tout en restant inférieure ou égale;
• insérer (304) dans chaque segment une information de vérification, ladite information de vérification comprenant dans chaque segment comprenant plus d'un bloc dans lequel elle est insérée un identifiant représentatif du numéro du bloc ayant le rang le plus élevé dans ledit segment, et comprenant de plus, lorsqu'elle est insérée dans le segment contenant le bloc de rang le plus faible, un code d'identification d'erreurs permettant de déterminer si l'ensemble de blocs a été reçu ; et,
• transmettre (305) chaque segment au second nœud dans une trame protocolaire ;
et, en cas de réception d'un accusé de réception de la part du second nœud contenant une information représentative d'au moins un bloc non reçu par le second nœud, appliquer la procédure d'encapsulation et de transmission à au moins chaque bloc non reçu, le second nœud ayant utilisé chaque information de vérification reçue pour déterminer chaque bloc perdu.

2. Procédé selon la revendication 1, **caractérisé en ce que** le réseau est un réseau sans fil à grande portée et permettant une faible consommation d'énergie basé sur la technologie LoRa, le protocole est le protocole LoRaWAN et le premier nœud est un dispositif adapté pour communiquer sur un réseau LoRa en utilisant le protocole LoRaWAN, dit terminal LoRa, et le second nœud est un serveur de réseau LoRa ou le premier nœud est un serveur de réseau LoRa et le second nœud est un terminal LoRa.

3. Procédé selon la revendication 1 ou 2, **caractérisé en ce que** lorsque, si, suite à la transmission de chaque segment au deuxième nœud, le premier nœud ne reçoit pas d'accusé de réception de la part du deuxième nœud après une durée prédéfinie suivant la transmission du dernier segment, le premier nœud transmet au second nœud un segment contenant au moins le bloc de rang le plus faible, le code d'identification d'erreurs et un identifiant représentatif du numéro du bloc ayant le rang le plus élevé dans ledit segment.

4. Procédé selon la revendication 1, 2, ou 3, **caractérisé en ce que** l'information de vérification est comprise dans un entête dudit segment, ledit entête comprenant en outre une information représentative d'un changement d'ensemble de blocs dont une valeur est modifiée à chaque fois qu'un nouvel ensemble de blocs est transmis au second nœud et/ou une information représentative d'une demande d'accusé de réception, permettant d'activer ou pas un mécanisme d'accusé de réception, le premier nœud se mettant en attente d'un accusé de réception pour l'ensemble de blocs de la part du deuxième nœud lorsque ledit mécanisme est activé.

5. Procédé selon l'une quelconque des revendications précédentes, **caractérisé en ce que** l'information représentative d'au moins un bloc non reçu par le second nœud est une suite de bits, chaque bit de la suite représentant un bloc de l'ensemble de blocs, et pour chaque bit, une première valeur dudit bit indique une réception du bloc correspondant et une seconde valeur dudit bit indique une non réception du bloc correspondant.

6. Procédé selon l'une quelconque des revendications précédentes, **caractérisé en ce que** l'accusé de réception comprend une information permettant d'identifier à quel ensemble de blocs se rapporte ledit accusé de réception et/ou une information indiquant si, lors d'une vérification d'une intégrité des blocs reçus en utilisant le code de détection d'erreurs, le second nœud a détecté ou pas une erreur.

7. Procédé selon la revendication 2 ou les revendications 3 à 6 lorsqu'elles dépendent de la revendication 2 **caractérisé en ce que** lorsque le premier nœud est un serveur et le deuxième nœud est un terminal LoRa fonctionnant en classe A selon le protocole LoRaWAN, lorsque le deuxième nœud a reçu un premier segment comprenant des blocs d'un ensemble de blocs, à chaque réception d'un segment, le deuxième nœud mesure une durée depuis la réception dudit segment et, lorsque ladite durée est supérieure à une durée maximale prédéfinie sans qu'il ait transmis de trame vers le premier nœud, transmet une trame protocolaire représentative d'une demande de transmission de données au premier nœud afin de permettre au premier nœud de transmettre un nouveau segment.

8. Dispositif, dit premier nœud, de type nœud de communication adapté pour communiquer avec un second dispositif de type nœud de communication, dit second nœud, dans un réseau utilisant un protocole de transmission par trames, chaque trame conforme audit protocole, dite trame protocolaire, comprenant un conteneur destiné à transporter des données utiles, chaque conteneur ayant une taille pouvant varier d'une trame protocolaire à une autre trame protocolaire, **caractérisé en ce que** le dispositif comprend:
des moyens d'obtention pour obtenir (300) une trame de données utiles à transmettre au deuxième noeud ;
des moyens de segmentation pour diviser (301) la trame de données utiles en un ensemble de blocs de taille prédéfinie, chaque bloc étant associé à un numéro égal à un rang dudit bloc dans la trame de données utiles ;
des moyens de traitements pour appliquer une procédure d'encapsulation et de transmission aux blocs dudit ensemble comprenant :
• des moyens de parcours pour parcourir (303) les blocs par ordre décroissant de leur numéro, et insérer les blocs dans cet ordre dans au moins un segment, les blocs étant insérés dans chaque segment jusqu'à atteindre une taille de segment aussi proche que possible d'une taille courante d'un conteneur tout en restant inférieure ou égale;
• des moyens d'encapsulation pour insérer (304) dans chaque segment une information de vérification, ladite information de vérification comprenant dans chaque segment comprenant plus d'un bloc dans lequel elle est insérée un identifiant représentatif du numéro du bloc ayant le rang le plus élevé dans ledit segment, et comprenant de plus, lorsqu'elle est insérée dans le segment contenant le bloc de rang le plus faible, un code d'identification d'erreur permettant de déterminer si l'ensemble de blocs a été reçu ;
• des moyens de transmission pour transmettre (305) chaque segment au second nœud dans une trame protocolaire ;
et, des moyens de réception pour recevoir du second nœud un accusé de réception comprenant une information représentative d'au moins un bloc non reçu par le second nœud,
des moyens de traitement pour appliquer la procédure d'encapsulation et de transmission à au moins chaque bloc non reçu en cas de réception d'un tel accusé de réception de la part du second nœud, le second nœud ayant utilisé chaque information de vérification reçue pour déterminer chaque bloc perdu.

9. Programme d'ordinateur, **caractérisé en ce qu'**il comprend des instructions pour mettre en œuvre, par un dispositif (100, 120), le procédé selon l'une quelconque des revendications 1 à 7, lorsque ledit programme est exécuté par un processeur dudit dispositif.

10. Moyens de stockage, **caractérisés en ce qu'**ils stockent un programme d'ordinateur comprenant des instructions pour mettre en œuvre, par un dispositif (100, 120), le procédé selon l'une quelconque des revendications 1 à 7, lorsque ledit programme est exécuté par un processeur dudit dispositif.

## Patentansprüche

1. Verfahren zur Kommunikation zwischen einem ersten und einem zweiten Knoten in einem Netz, das ein Protokoll zur Übertragung durch Rahmen nutzt, wobei jeder Rahmen, der dem Protokoll entspricht, Protokollrahmen genannt, einen Container umfasst, der dazu bestimmt ist, Nutzdaten zu transportieren, wobei jeder Container eine Größe aufweist, die von einem Protokollrahmen zu einem anderen Protokollrahmen variieren kann, **dadurch gekennzeichnet, dass** das Verfahren Schritte umfasst, die vom ersten Knoten ausgeführt werden, umfassend:
Erhalten (300) eines Nutzdatenrahmens, der an den zweiten Knoten zu übertragen ist;
Aufteilen (301) des Nutzdatenrahmens in eine Menge von Blöcken vorgegebener Größe,
wobei jeder Block einer Nummer zugeordnet ist, die gleich einem Rang des Blocks im Nutzdatenrahmen ist;
Anwenden eines Kapselungs- und Übertragungsverfahrens auf die Blöcke der Menge,
umfassend:
• Durchlaufen der Blöcke in absteigender Reihenfolge ihrer Nummer und Einfügen der Blöcke in mindestens ein Segment in dieser Reihenfolge, wobei die Blöcke in jedes Segment eingefügt werden, bis eine Segmentgröße erreicht ist, die so nah wie möglich an einer aktuellen Größe eines Containers ist, dabei kleiner oder gleich bleibt;
• Einfügen (304) einer Überprüfungsinformation in jedes Segment, wobei die Überprüfungsinformation in jedem Segment mit mehr als einem Block, in das sie eingefügt wird, eine Kennung aufweist, die für die Nummer des Blocks mit dem höchsten Rang in dem Segment repräsentativ ist, und außerdem, wenn sie in das Segment eingefügt wird, das den Block niedrigsten Rangs enthält, einen Fehleridentifizierungscode umfasst, der es gestattet zu bestimmen, ob die Menge von Blöcken empfangen wurde; und,
• Übertragen (305) jedes Segments an den zweiten Knoten in einem Protokollrahmen;
und, im Falle des Empfangs einer Empfangsbestätigung seitens des zweiten Knotens, die eine Information enthält, die für mindestens einen Block repräsentativ ist, der vom zweiten Knoten nicht empfangen wurde, Anwenden des Kapselungs- und Übertragungsverfahrens auf wenigstens jeden nicht empfangenen Block, wobei der zweite Knoten jede empfangene Überprüfungsinformation genutzt hat, um jeden verlorenen Block zu bestimmen.

2. Verfahren nach Anspruch 1, **dadurch gekennzeichnet, dass** das Netz ein Drahtlosnetz mit großer Reichweite und geringem Energieverbrauch auf Grundlage der LoRa-Technologie ist, das Protokoll das LoRaWAN-Protokoll ist und der erste Knoten eine Vorrichtung ist, die geeignet ist, in einem LoRa-Netz unter Verwendung des LoRaWAN-Protokolls zu kommunizieren, LoRa-Endgerät genannt, und der zweite Knoten ein LoRa-Netzserver ist oder der erste Knoten ein LoRa-Netzserver und der zweite Knoten ein LoRa-Endgerät ist.

3. Verfahren nach Anspruch 1 oder 2, **dadurch gekennzeichnet, dass**, wenn nach der Übertragung jedes Segments an den zweiten Knoten der erste Knoten nach einer vorgegebenen Dauer nach der Übertragung des letzen Segments keine Empfangsbestätigung seitens des zweiten Knotens empfängt, der erste Knoten ein Segment an den zweiten Knoten überträgt, das wenigstens den Block niedrigsten Rangs, den Fehleridentifizierungscode und eine Kennung, die für die Nummer des Blocks mit dem höchsten Rang in dem Segment repräsentativ ist, enthält.

4. Verfahren nach Anspruch 1, 2 oder 3, **dadurch gekennzeichnet, dass** die Überprüfungsinformation in einem Kopf des Segments enthalten ist, wobei der Kopf ferner eine Information umfasst, die für eine Änderung einer Menge von Blöcken repräsentativ ist, von der ein Wert jedes Mal geändert wird, wenn eine neue Menge von Blöcken an den zweiten Knoten übertragen wird, und/oder eine Information, die für eine Anforderung einer Empfangsbestätigung repräsentativ ist, die es gestattet, einen Empfangsbestätigungsmechanismus zu aktivieren oder nicht, wobei der erste Knoten auf eine Empfangsbestätigung für die Menge von Blöcken seitens des zweiten Knotens wartet, wenn der Mechanismus aktiviert ist.

5. Verfahren nach einem der vorhergehenden Ansprüche, **dadurch gekennzeichnet, dass** die Information, die für mindestens einen Block repräsentativ ist, der vom zweiten Knoten nicht empfangen wurde, eine Bitfolge ist, wobei jedes Bit der Folge einen Block der Menge von Blöcken darstellt und für jedes Bit ein erster Wert des Bits einen Empfang des entsprechenden Blocks anzeigt und ein zweiter Wert des Bits einen Nicht-Empfang des entsprechenden Blocks anzeigt.

6. Verfahren nach einem der vorhergehenden Ansprüche, **dadurch gekennzeichnet, dass** die Empfangsbestätigung eine Information umfasst, die es gestattet, festzustellen, auf welche Menge von Blöcken sich die Empfangsbestätigung bezieht, und/oder eine Information, die bei einer Überprüfung einer Integrität der empfangenen Blöcke unter Verwendung des Fehlerfeststellungscodes angibt, ob der zweite Knoten einen Fehler festgestellt hat oder nicht.

7. Verfahren nach Anspruch 2 oder den Ansprüchen 3 bis 6, wenn sie von Anspruch 2 abhängig sind, **dadurch gekennzeichnet, dass**, wenn der erste Knoten ein Server und der zweite Knoten ein LoRa-Endgerät ist, das gemäß dem LoRaWAN-Protokoll nach Klasse A betrieben wird, wenn der zweite Knoten ein erstes Segment empfangen hat, das Blöcke einer Menge von Blöcken umfasst, bei jedem Empfang eines Segments der zweite Knoten eine Dauer ab dem Empfang des Segments misst, und, wenn die Dauer länger als eine vorgegebene Höchstdauer ist, ohne dass er einen Rahmen an den ersten Knoten übertragen hat, einen Protokollrahmen überträgt, der für eine Anforderung zur Übertragung von Daten an den ersten Knoten repräsentativ ist, um es dem ersten Knoten zu gestatten, ein neues Segment zu übertragen.

8. Vorrichtung, erster Knoten genannt, vom Typ Kommunikationsknoten, die geeignet ist, mit einer zweiten Vorrichtung vom Typ Kommunikationsknoten, zweiter Knoten genannt, in einem Netz zu kommunizieren, das ein Protokoll zur Übertragung durch Rahmen nutzt, wobei jeder Rahmen, der dem Protokoll entspricht, Protokollrahmen genannt, einen Container umfasst, der dazu bestimmt ist, Nutzdaten zu transportieren, wobei jeder Container eine Größe aufweist, die von einem Protokollrahmen zu einem anderen Protokollrahmen variieren kann, **dadurch gekennzeichnet, dass** die Vorrichtung Folgendes umfasst:
Erhaltungsmittel zum Erhalten (300) eines Nutzdatenrahmens, der an den zweiten Knoten zu übertragen ist;
Segmentierungsmittel zum Aufteilen (301) des Nutzdatenrahmens in eine Menge von Blöcken vorgegebener Größe, wobei jeder Block einer Nummer zugeordnet ist, die gleich einem Rang des Blocks im Nutzdatenrahmen ist;
Verarbeitungsmittel zum Anwenden eines Kapselungs- und Übertragungsverfahrens auf die Blöcke der Menge, umfassend:
• Durchlaufmittel zum Durchlaufen (303) der Blöcke in absteigender Reihenfolge ihrer Nummer und Einfügen der Blöcke in mindestens ein Segment in dieser Reihenfolge, wobei die Blöcke in jedes Segment eingefügt werden, bis eine Segmentgröße erreicht ist, die so nah wie möglich an einer aktuellen Größe eines Containers ist, dabei kleiner oder gleich bleibt;
• Kapselungsmittel zum Einfügen (304) einer Überprüfungsinformation in jedes Segment, wobei die Überprüfungsinformation in jedem Segment mit mehr als einem Block, in das sie eingefügt wird, eine Kennung aufweist, die für die Nummer des Blocks mit dem höchsten Rang in dem Segment repräsentativ ist, und außerdem, wenn sie in das Segment eingefügt wird, das den Block niedrigsten Rangs enthält, einen Fehleridentifizierungscode umfasst, der es gestattet zu bestimmen, ob die Menge von Blöcken empfangen wurde;
• Übertragungsmittel zum Übertragen (305) jedes Segments an den zweiten Knoten in einem Protokollrahmen;
und Empfangsmittel zum Empfangen einer Empfangsbestätigung vom zweiten Knoten, die eine Information umfasst, die für mindestens einen Block repräsentativ ist, der vom zweiten Knoten nicht empfangen wurde,
Verarbeitungsmittel zum Anwenden eines Kapselungs- und Übertragungsverfahrens auf wenigstens jeden nicht empfangenen Block im Falle des Empfangs einer derartigen Empfangsbestätigung seitens des zweiten Knotens, wobei der zweite Knoten jede empfangene Überprüfungsinformation genutzt hat, um jeden verlorenen Block zu bestimmen.

9. Computerprogramm, **dadurch gekennzeichnet, dass** es Anweisungen umfasst, um durch eine Vorrichtung (100, 120) das Verfahren nach einem der Ansprüche 1 bis 7 durchzuführen, wenn das Programm von einem Prozessor der Vorrichtung ausgeführt wird.

10. Speichermittel, **dadurch gekennzeichnet, dass** sie ein Computerprogramm speichern, das Anweisungen umfasst, um durch eine Vorrichtung (100, 120) das Verfahren nach einem der Ansprüche 1 bis 7 durchzuführen, wenn das Programm von einem Prozessor der Vorrichtung ausgeführt wird.

## Claims

1. A method for communication between first and second nodes in a network using a frame transmission protocol, each frame in accordance with said protocol, referred to as a protocol frame, comprising a payload intended to transport useful data, each payload having a size that may vary from one protocol frame to another protocol frame, wherein the method comprises steps executed by the first node comprising:
obtaining (300) a payload frame to be transmitted to the second node;
dividing (301) the payload frame into a set of blocks of predefined size, each block being associated with a number equal to a rank of said block in the payload frame;
applying an encapsulation and transmission procedure to the blocks of said set comprising:
• running through the blocks in decreasing order of their number, and inserting the blocks in this order in at least one segment, the blocks being inserted in each segment until a segment size that is as close as possible to a current size of a payload is reached while remaining smaller than or equal to it;
• inserting (304) verification information in each segment, said verification information comprising, in each segment comprising more than one block in which it is inserted, an identifier representing the number of the block that has the highest rank in said segment, and in addition comprising, when it is inserted in the segment containing the block with the lowest rank, an error identification code making it possible to determine whether the set of blocks has been received; and
• transmitting (305) each segment to the second node in a protocol frame;
and, in the case of reception of an acknowledgement of reception from the second node containing information representing at least one block not received by the second node, applying the encapsulation and transmission procedure to at least each block that was not received, the second node having used each item of verification information received in order to determine each block lost.

2. The method according to claim 1, wherein the network is a long-range wireless network affording low energy consumption based on LoRa technology, the protocol is the LoRaWAN protocol and the first node is a device suitable for communicating on a LoRa network using the LoRaWAN protocol, referred to as a LoRa endpoint, and the second node is a LoRa network server, or the first node is a LoRa network server and the second node is a LoRa endpoint

3. The method according to claim 1 or 2, wherein if, following the transmission of each segment to the second node, the first node does not receive an acknowledgement of reception from the second node after a predefined time following the transmission of the last segment, the first node transmits to the second node a segment containing at least the block with the lowest rank, the error identification code and an identifier representing the number of the block that has the highest rank in said segment.

4. The method according to anyone of claims 1 to 3, wherein the verification information is included in a header of said segment, said header further comprising information representing a change of set of blocks a value of which is modified each time a new set of blocks is transmitted to the second node and/or information representing a request for acknowledgement of reception, making it possible to activate or not a reception acknowledgement mechanism, the first node awaiting an acknowledgement of reception for the set of blocks from the second node when said mechanism is activated.

5. The method according to anyone of the preceding claims, wherein the information representing at least one block not received by the second node is a series of bits, each bit in the series representing a block in the set of blocks, and, for each bit, a first value of said bit indicates a reception of the corresponding block and a second value of said bit indicates non-reception of the corresponding block.

6. The method according to anyone of the preceding claims, wherein the acknowledgement of reception comprises information for identifying to which set of blocks said acknowledgement of reception relates and/or information indicating if, when there is a verification of integrity of the blocks received using the error detection code, the second node has or has not detected an error.

7. The method according to claim 2, wherein the first node is a server and the second node is a LoRa endpoint functioning in class A according to the LoRaWAN protocol, when the second node has received a first segment comprising blocks in a set of blocks, at each reception of a segment the second node measures a time since the reception of said segment and, when said time is greater than a predefined maximum time without a frame having been transmitted to the first node, transmits a protocol frame representing a request for transmission of data to the first node in order to enable the first node of transmit a new segment.

8. A device, referred to as the first node, of the communication node type suitable for communicating with a second device of the communication node type, referred to as the second node, in a network using a frame transmission protocol, each frame in accordance with said protocol, referred to as a protocol frame, comprising a payload intended to transport useful data, each payload having a size that may vary from one protocol frame to another protocol frame, wherein the device comprises electronic circuitry configured for:
obtaining (300) a payload frame to be transmitted to the second node;
dividing (301) the payload frame into a set of blocks of predefined size, each block being associated with a number equal to a rank of said block in the payload frame;
applying an encapsulation and transmission procedure to the blocks in said set comprising:
• running through (303) the blocks in decreasing order of their number, and inserting the blocks in this order in at least one segment, the blocks being inserted in each segment until a segment size as close as possible to a current size of a payload is reached while remaining smaller than or equal to it;
• inserting (304) verification information in each segment, said verification information comprising, in each segment comprising more than one block in which it is inserted, an identifier representing the number of the block that has the highest rank in said segment, and also comprising, when it is inserted in the segment containing the block with the lowest rank, an error identification code for determining whether the set of blocks has been received;
• transmitting (305) each segment to the second node in a protocol frame;
and receiving from the second node an acknowledgement of reception comprising information representing at least one block not received by the second node,
applying an encapsulation and transmission procedure to at least each block not received in the case of reception of such an acknowledgement of reception from said second node, the second node having used each item of verification information received in order to determine each block lost.

9. Computer program, **characterized in that** it comprises instructions for implementing, by a device (100, 200), the method according to any one of claims 1 to 7, when said program is executed by a processor of said device.

10. Storage means, **characterized in that** they store a computer program comprising instructions for implementing, by a device (100, 200), the method according to any one of claims 1 to 7, when said program is executed by a processor of said device.
